# EUROPEAN PATENT SPECIFICATION

(11) **EP 2 543 043 B1**
(45) Date of publication and mention of the grant of the patent: **05.04.2017**
(21) Application number: 11716087.9
(22) Date of filing: 23.02.2011
(51) Int. Cl.: G21C 3/34, G21C 7/10, B22F 7/00, B32B 15/04, C04B 37/00, C22C 1/05, C23C 12/00, C23C 24/08

(54) **A REACTOR COMPONENT**
BAUTEIL ZUM EINSATZ IN EINEM KERNREAKTOR
COMPOSANT D'UN RÉACTEUR NUCLÉAIRE

(30) Priority: 01.03.2010 SE 1050188
(43) Date of publication of application: 09.01.2013
(73) Proprietor: Westinghouse Electric Sweden AB, 721 63 Västerås (SE)
(72) Inventor: HALLSTADIUS, Lars, S-725 92 Västerås (SE); BACKMAN, Karin, S-722 46 Västerås (SE); REBENSDORFF, Björn, S-722 10 Västerås (SE); WIDEGREN, Hans, S-723 41 Västerås (SE)
(74) Representative: Berglund, Stefan
(86) International application number: PCT/SE2011/050203
(87) International publication number: WO 2011/108974

(56) References cited:
- EP-A1- 1 249 844
- WO-A1-94/14164
- WO-A1-97/02576
- WO-A1-97/50091
- WO-A1-98/53940
- DE-A1- 19 834 216
- GB-A- 928 517
- JP-A- 4 187 739
- JP-A- 11 012 758
- JP-A- 11 292 648
- US-A- 3 249 509
- US-A- 5 268 235
- US-A1- 2004 195 296
- US-A1- 2007 189 952
- DATABASE WPI Week 198227 Thomson Scientific, London, GB; AN 1982-56583E XP002649850, -& SU 735 101 A1 (IOFFE PHYS TECH INST) 15 December 1981 (1981-12-15)

## Description

### TECHNICAL FIELD OF THE INVENTION

The present invention relates to a reactor component according to the preamble of claim 1, see US-3, 249, 509.

### PRIOR ART

Reactor components for fission reactors are components which are located in an environment that is influenced by the fission process or in vicinity of the fission process. Such reactor components can have various functions such as constructural material in nuclear fuel elements, components for controlling the fission process, components for measurements of different parameters in the reactor, etc. The reactor components are often in contact with an outer surrounding, such as the reactive environment in a fission reactor. The outer surrounding can comprise substances that are chemically aggressive at high temperatures and pressure. The outer surrounding around the reactor components can for example consist of moderator and cooling medium, which comprises light water in pressurized and boiling water reactors.

The aggressive substances in the outer surrounding can react with the reactor components, for example by different types of corrosion influence, and thereby the function of the components can deteriorate or entirely cease. An example of corrosion influence is so-called shadow corrosion, which can result in a local increased corrosion on reactor components that are located in the vicinity of a fission process. Shadow corrosion can give rise to locally high oxide thickness on the reactor components, which can result in that the function of the reactor component deteriorate or entirely cease. The reactor components can also be influenced by different forms of abrasion processes or wearing in combination with corrosion or other interaction. Also different forms of material removing processes, such as material removing abrasion, fretting and erosion corrosion, can occur on the reactor components. The abrasion can for example occur by means of contact between near by components or by means of contact between the reactor component and a material stream of the outer surrounding, such as the cooling medium streaming through the reactor. In the later case, material can be removed from the reactor component when the medium of the outer surrounding with high speed collides with the reactor component and removes material from the surface of the component. When one or more reactor components has been affected by abrasion, corrosion or other influence, it may be necessary to stop the reactor in order to remove the failing reactor components. An operational stop results in great costs in form of loss of production and costs for repair or exchange of the failing reactor components.

Reactor components can by its operation in the reactor be activated and become radio-active. The outer surrounding in the reactor around the reactor components can be contaminated by the reactor components and the outer surrounding reacting with each other or by various forms of material removing processes. A contamination of the outer surrounding with material from the reactor components result in a dispersion of radio-active substances in the reactor. Material removal from the reactor components can also result in pieces of the reactor components being worn off. These pieces can be displaced in the cooling system and abrade on other reactor components, for example the cladding tubes in a fuel element, which can result in that the reactor components function deteriorate or cease. In the example with abrasion on the fuel rods in a fuel element, this can result in so-called fuel failures, where fissile material comes into contact with the outer surrounding and contaminates the outer surrounding. A contamination of the outer surrounding results in maintenance personal at the reactor being exposed to increased radiation doses at maintenance work. It can also be required that the reactor is shut down and that the failing reactor components are exchanged.

The material thickness of the reactor components is dimensioned with certain safety margins against the occurrence of different types of interaction from, for example corrosion and abrasion. It is desirable, by means of different types of improvements, to reduce the thickness of the material of the reactor components. One reason for decreasing the material thickness of a component is that used reactor components due to their reactivity need special treatment of storage until their reactivity has decreased to certain levels. This type of treatment or storage is costly, why a reduction of the material quantity of the reactor components is desirable. The function of certain reactor components is improved when their material thickness decreases. One example of a reactor component whose function is improved by a reduced material thickness is so-called spacers, which function to separate the fuel rods in a fuel element and to create turbulence in the flow of the cooling media for transferring of heat from the fuel rods to the cooling medium. By reducing the material thickness of the spacers, the pressure loss in the fuel element caused by the spacers is reduced. Thereby, for example, the number of spacers in a fuel element can be increased with an improved heat transfer capability to the cooling media, and at the same time the total pressure loss over the fuel element is maintained.

A technique for treating burned out nuclear fuel for further storage is described in EP-1249844. In the document burned out nuclear fuel is treated with a powder of aluminium and boron that is pressed by means of Cold Isostatic Pressing (CIP) and then sintered together by means of plasma sintering.

WO 97/50091 discloses a spacer of a ceramic material for a fuel element. The ceramic spacer is manufactured by means of traditional sintering method. A problem when using ceramical materials as constructural materials is to assure the mechanical properties of the material, such as strength, fatigue resistance etc. In traditional manufacturing of ceramic components different types of defects are introduced into the material, which have a negative implication on the mechanical properties. The document does not disclose any material gradient between two different materials.

WO 94/14164 discloses an abrasion resistant coating on a fuel element and a control rod. The coating comprises a ceramical material mixed into a glass matrix, where the glass matrix forms the binding to the below located metallical material. The coating is applied on the metallical material by means of a spray method. The document does not disclose any material gradient between two different materials.

### SUMMARY OF INVENTION

The object with the present invention is to provide a reactor component with improved properties.

This object is achieved with the initially defined component that comprises the features that are defined in the characterising portion of claim 1.

The reactor component achieves the above mentioned object by means of the intermediate layer between the core and the layer. The intermediate layer comprises or consists of a mixture of the first material and the second material.

The reactor component relates to a component that is adapted to be used in fission reactors. The reactor component comprises a core and a layer that at least partly encloses the core. The core of the component consists of the first material and the layer of the component consists of the second material.

According to the invention, the layer of the reactor component consists of at least a substance chosen from the group Ti, Zr, Al, Fe, Cr, Ni, SiC, SiN, ZrO₂, Al₂O₃, mixture thereof, and possible balance. The substances from this group possess properties that are suitable for the layer of the reactor component.

The intermediate layer is a layer between the core and the layer that provides a transition of the properties from the first material to the second material. The intermediate layer comprises a step-by-step or a gradual transition of the concentration of the first and the second material. The intermediate layer has a material gradient, which means that the concentration of the first material and the second material in the intermediate layer is greater than zero. The material gradient comprises a concentration change in comparison with the core and in comparison with the layer. The material gradient can comprise a homogenous mixture of the first and the second material. The material gradient can also comprise a change within the intermediate layer of the proportion between the concentration of the first and the second material. Thereby, the material gradient can be adjusted in account to the material properties, such as regards to temperature expansion, of the first and the second material in order to obtain good material properties of the reactor component. By means of the material gradient a transition is formed between the first material in the core and the second material in the layer, which provides a strong adhesion between the layer and the core. The material gradient in the intermediate layer results in a reduction of interior stresses in the component created by thermal and elastical differences between the first and the second material. Thereby, an improved adhesion of the layer to the core arises, which provides an improved functionality to component.

According to an embodiment of the invention, the material gradient comprises a successive decrease of the concentration of the first material from the core to the layer and a successive increase of the concentration of the second material from the core to the layer. Thereby, the material gradient is arranged to provide a gradual transition of the properties from the first material to the second material, and vice versa.

According to an embodiment of the invention, the reactor component is manufactured by means sintering, which provides the component a good sintering together of the first material with the second material. The sintering method can comprise or be combined with an applied pressure and/or an elevated temperature. The sintering method assures that several material properties, such as grain size and porosity, of the sintered component can be controlled within a wide interval. The sintering method can comprise the steps of: feeding of the first material and the second material to a space of a tool in such a way that the second material at least partly encloses the first material, and sintering together the first and the second material to the neutron absorbing component so that the intermediate layer between the core and the layer is formed. At feeding of the first material and the second material an intermediate zone is formed between an inner part of the space and an outer part of the space. The intermediate zone comprises a decrease of the concentration of the first material from the inner part of the space to the outer part of a space and increase of the concentration of the second material from the inner part of a space to the outer part of a space. Furthermore, the space can be vibrated in such a way that the first material and the second material are brought together and form the intermediate zone. The first material that is fed can be in powder form. Also the second material that is fed can be in powder form.

Furthermore, the space can be divided by an inner separating member, that comprises the inner part and an outer separating member that comprises the outer part, wherein an intermediate part is formed between the outer separating member and the inner separating member. The separating members can for example be configured as pipes depending on the shape of the components that shall be manufactured. The intermediate part is fed with a mixture of the first material and the second material for forming the intermediate zone. The intermediate part can also be divided into divisions of at least an intermediate member, wherein the divisions are fed with mixture of different proportions between the concentration of the first material and the second material.

According to an embodiment of the invention, the layer is arranged to protect the core, for example from an outer surrounding. Thereby, the core of the reactor component is protected from interaction, such as different types of corrosion and abrasion. The interaction can comprise a reaction between the reactor component and an outer surrounding, such as corrosion of the reactor component or material removal on the reactor component. The interaction can also comprise abrasion between adjacent reactor components. By means of the protection provided by the layer to the core of the reactor component, the functionality of the reactor component can be assured, wherein the operational reliability of a reactor component is improved. In the same manner, the layer protects surrounding components from being affected by the reactor component, such as interaction from shadow corrosion. Thereby, operational shut down of the reactor due to failing reactor components can be avoided. Thanks to the protective function of the layer to the core of the reactor component, abrasion of pieces of the core of the reactor component is also avoided. These pieces can create damages on other reactor components, for example, in form of fuel failures on fuel elements. Since the reactor component is protected by the layer, also material removal from the reactor component comprising radio-active substances is avoided. Thereby, dispersion of radio-active substances in the outer surrounding can be avoided. By avoiding the outer surrounding from being contaminated, the exposure of maintenance personal to radiation doses at maintenance work at the reactor is reduced. The protective function of a layer can also be used to reduce the material thickness of the reactor component. Thereby, the costs for waste treatment of used reactor components can be reduced. For certain reactor components, such as spacers in fuel elements, a reduction of the material thickness of the reactor components provides an improved performance. This improved performance can for example be used in order to increase the efficiency of the reactor.

The outer surrounding is composed of the surrounding around the reactor components, which mainly comprises a moderating and a cooling medium. At reactor operation, the outer surrounding forms a reactive environment that at contact can react with the reactor component.

According to an embodiment of the invention, the layer is essentially corrosion resistant in an environment of a fission reactor. Essentially corrosion resistant means that the layer is chemically inert or essentially chemically inert and that the its protective effect thereby is maintained at exposure to the outer surrounding in a fission reactor. By means of the corrosion resistance of the layer, the core of the reactor component is protected from interaction with the outer surrounding. Thereby, the integrity and function of the reactor component are assured.

According to an embodiment of the invention, the layer is arranged to at least partly electrically isolate the core from an outer surrounding. Electrical isolation means that the layer resists conducting an electric current. Since the layer at least partly electrically isolates the core, various types of corrosion influence are prevented, such as shadow corrosion, on reactor components or corrosion influence between different reactor components.

According to an embodiment of the invention, the layer has a higher abrasive resistance than the core of the reactor component. Thereby, the layer protects the core of the reactor component from different forms of abrasion, such as mechanical abrasion between adjacent reactor components, erosion corrosion, etc. Thereby the integrity and function of the reactor component are assured.

According to an embodiment of the invention, the layer of a reactor component comprises at lest a metallic material and a ceramic material. Certain materials from these groups possess properties that are especially suitable in reactor environments. For example, certain ceramic material, such as SiC, have a high corrosion resistance, a high hardness and are heat resistant. For example, certain metallic materials, such as Zr, have a high corrosion resistance and good mechanical properties.

According to an embodiment of the invention, the layer completely encloses the core. Thereby, the core is completely protected and separated from the outer surrounding.

According to an embodiment of the invention, the reactor component comprises at least a part of a spacer for a fuel element. Thereby, the spacer can be assembled from one or more reactor components in different configurations. Thereby, the spacer is adapted for use in different types of reactors. By means of the layer, the spacer is protected from different forms of interaction, such as shadow corrosion, abrasion, fretting, erosion corrosion, etc.

The function of a spacer is to separate fuel rods in a fuel element and to create turbulence in the flow of the cooling medium for transferring heat from the fuel rods to the cooling medium. The spacer comprises a grid of spacer cells, which are adapted to receive fuel rods. The gitter or the spacer can for example be constructed by longitudinal and transversal spacer walls, of joined sleeves, or by other designs. The reactor component can for example be comprises by a spacer wall, which together with a plurality of spacer walls are assembled to a spacer. In the same manner, the reactor component can comprise a spacer sleeve, which together with a plurality of spacer sleeves is assembled to a spacer element. Also other arrangements of the reactor component can be combined so that they individually or together form a spacer.

According to an embodiment of the invention, the spacer is arranged to be used in a light water fission reactor of the type boiling water reactor.

According an embodiment of the invention, the reactor component constitutes at least a part of a tip of a control rod adapted to be inserted into or adjacent to a fuel element. By means of the layer, the tip of the control rod is protected from different forms of interaction, such as shadow corrosion, abrasion, fretting, erosion corrosion, etc.

The function of a control rod is to control the reactivity in a fission reactor. The control rod can come into contact with or be influenced by adjacent components, such as the guide tube in a fuel element for a pressurized water reactor or the fuel channel in a fuel element for a boiling water reactor.

According to an embodiment of the invention, the tip of the control rod is arranged to be used in a light water fission reactor of type pressurized water reactor.

### BRIEF DESCRIPTION OF THE DRAWINGS

The invention will now be explained in detail by reference to different embodiments of the invention and with reference to the appended drawings.
Figure 1 discloses a cross-section of a reactor component according to an embodiment of the invention in a view seen from the side.
Figures 2 to 5 disclose diagrams with different examples of the material concentration of a cross-section of reactor components.
Figure 6a discloses a perspective view of an example of the invention in form of a spacer for a fuel element.
Figure 6b discloses a cross-section of a spacer wall in a spacer.
Figure 7a discloses a perspective view of an example of the invention in form of a tip of a control rod for a pressurized water reactor.
Figure 7b discloses a cross-section of a tip of a control rod for a pressurized water reactor.

### DETAILED DESCRIPTION OF PREFERRED EMBODIMENTS OF THE INVENTION

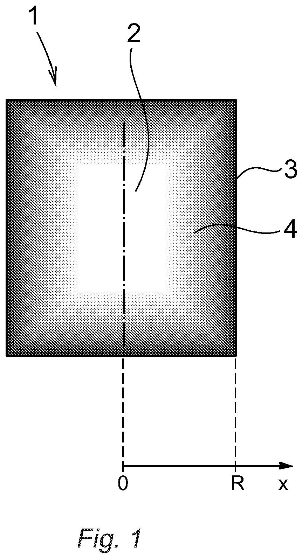

Figure 1 discloses an example of a reactor component 1, in the following denoted the component, according to an embodiment of the invention in a cross-section view seen from the side. The component 1 in figure 1 is a body with a centre in 0 and a surface at R, along an x-axis. The component can have an arbitrary shape that is given by its function in the reactor. For example, the shape of the component 1 can be flat, rectangular, square, spherical, cylindrical, etc.

The component 1 is adapted to be used in fission reactors and comprises a core 2 consisting of a first material and a layer 3 consisting of a second material. The layer 3 of a component encloses, in the exampled shown in figure 1, completely the core 2 and protects the core 2 from an outer surrounding by means of its protective properties, such as corrosion resistance and electrical isolation.

The component 1 is manufactured by sintering using a suitable sintering method. Examples of suitable sintering methods that can be used for the invention are classical sintering technique, sintering at atmospheric pressure and elevated temperature, Cold Isostatic Pressing, Hot Isostatic Pressing, Spark Plasma Sintering, etc.

The sintering is performed in such a way that an intermediate layer 4 is formed between the core 2 and the layer 3. The intermediate layer 4 comprises both the first material and the second material. The intermediate layer 4 has a material gradient, which comprises a decrease of the concentration of the first material from the core 2 to the layer 3 and an increase of the concentration of the second material from the core 2 to the layer 3. The intermediate layer 4 forms a transition between the core 2 and the layer 3, so that material properties of the first material is transferred into the properties of the second material, and vice versa. Thereby a good adhesion between the core 2 and the layer 3 is created.

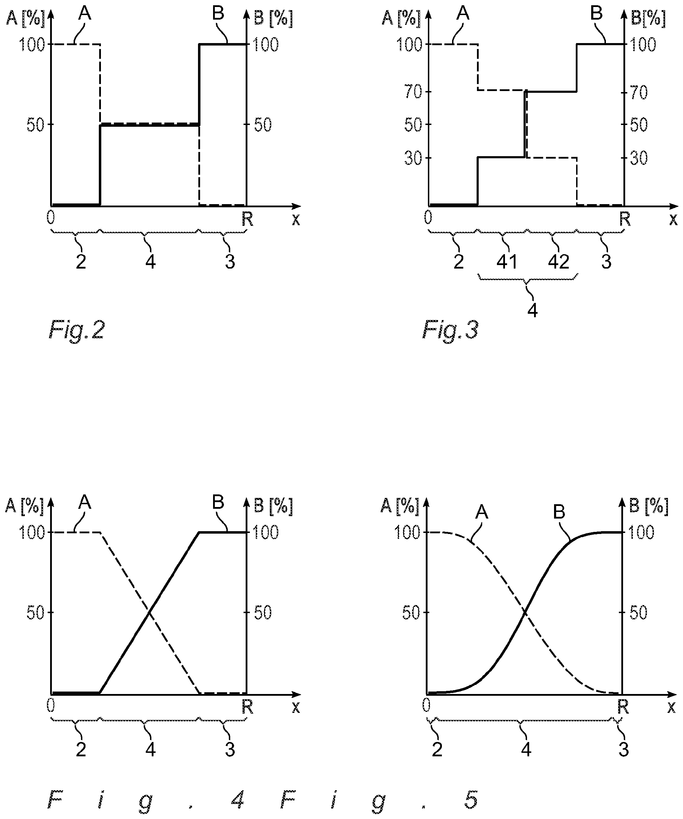

Figures 2 to 5 disclose examples of the material concentration of a cross-section of a reactor component. The x-axis of the figures is a dimensional axis, where 0 denotes the centre of the component and R denotes the outer periphery of the component. The y-axis of the figures denotes the material concentration for the component in percent for the first material, here denoted A and marked with a dotted line, and the second material, here denoted B and marked with a full line. In the figures, the core 2, the intermediate layer 4 and the layer 3 are designated along the x-axis of the figure.

Figure 2 discloses an example on a material concentration variation within a reactor component, where the intermediate layer 4 between the core 2 and the layer 3 has a material gradient that comprises a step-by-step decrease of the concentration of a first material from the core 2 to the layer 3, and a step-by-step increase of the concentration of a second material from the core 2 to the layer 3. In the example in figure 2, a decrease of the concentration of the first material from the core 2 to the intermediate layer 4 occurs in a stepwise manner, where the concentration of the first material decreases from essentially 100% in the core 2 to essentially 50% in the intermediate layer 4. The concentration of the first material is constant within the intermediate layer 4. Furthermore, a decrease occurs of the concentration of the first material from the intermediate layer 4 to the layer 3 step-by-step from essentially 50% to essentially 0%. On the other way around, an increase occurs of the concentration of the second material from the core 2 to the intermediate layer 4 step-by-step, where the concentration of the second material increases from essentially 0% in the core 2 to essentially 50% in the intermediate layer 4. The concentration of the second material is constant within the intermediate layer 4. Furthermore, an increase of the concentration of the second material from the intermediate layer 4 to the layer 3 occurs step-by-step from essentially 50% to essentially 100%.

Figure 3 discloses, in the same way as figure 2, an example of a step-by-step material concentration variation within the reactor component, with the difference that the intermediate layer comprises two concentration areas, a first concentration area 41 and a second concentration area 42 with different concentrations of the first material and the second material. The concentration of the first material and the second material is constant within the first concentration area 41 and the second concentration area 42. In the example in figure 3 a decrease of the concentration of the first material from the core 2 to the intermediate layer 4 occurs step-by-step, where the concentration of the first material decreases from essentially 100% in the core 2 to essentially 70% in the first concentration area 41 of the intermediate layer 4. Within the intermediate layer 4, a step-by-step decrease of the concentration of the first material from the first concentration area 41 to the second concentration area 42, from essentially 70% to essentially 30% occurs. A step-by-step decrease of the concentration of the first material from the second concentration area 42 of the intermediate layer 4 to the layer 3 occurs, from essentially 30% to essentially 0%. On the other way around, an increase of the concentration of the second material from the core 2 to the intermediate layer 4 occurs.

Figure 4 discloses an example of a material concentration variation within a reactor component, where the intermediate layer 4 between the core 2 and the layer 3 has a material gradient that comprises a successive decrease of the concentration of the first material from the core 2 to the layer 3, and a successive increase of the concentration of the second material from the core 2 to the layer 3. Within the intermediate layer 4, from the core 2 to the layer 3, a constant proportional decrease of the concentration of a first material occurs, from essentially 100% to essentially 0%. On the other way around, an increase of the concentration of the second material within the intermediate layer 4, from the core 2 to the layer 3, from essentially 0% to essentially 100% occurs.

Figure 5 discloses an example of a material concentration variation within a reactor component, where the intermediate layer 4 between the core 2 and the layer 3 has a material gradient that comprises a successive decrease of the concentration of a first material from the core 2 to the layer 3, and a successive increase of the concentration of a second material from the core 2 to the layer 3. In the example in figure 5, a decrease of the concentration of the first material from the core 2 to the intermediate layer 4 occurs successively. Within the intermediate layer 4 a gradual decrease of the concentration of the first material occurs, from essentially 100% to essentially 0%. The transition between the core 2 and the layer 3 can for example occur in a non-linear manner. On the other way around, an increase of the concentration of the second material from the core 2 occurs. In the disclosed example, the intermediate layer 4 constitutes the main part of the component, while the core 2 and the layer 3 constitute a minor part of the component.

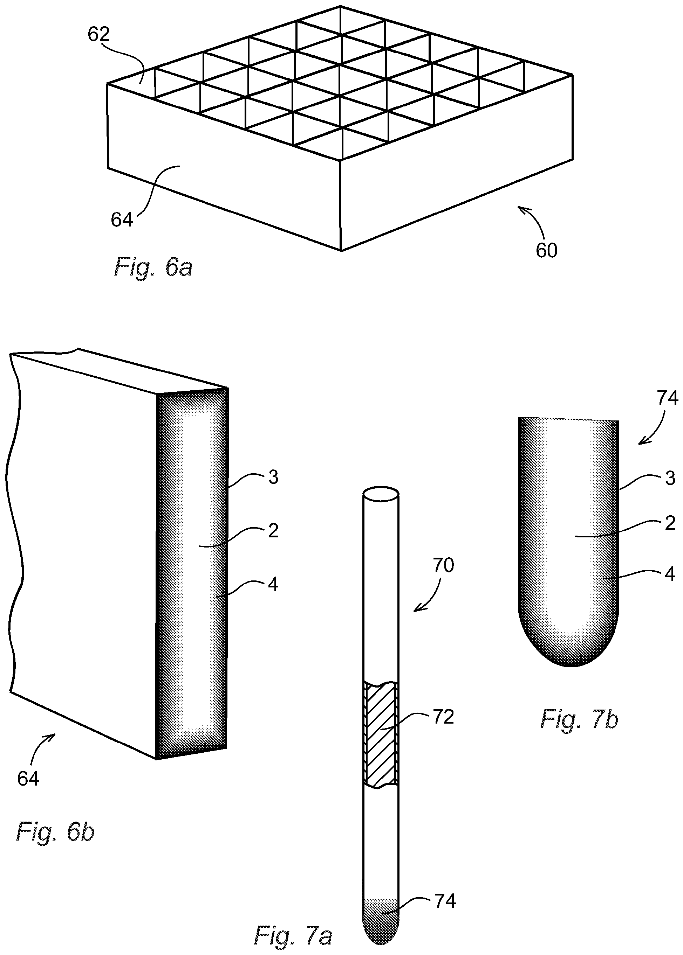

Figure 6a discloses a perspective view of an example of a reactor component in form of a spacer 60 for a fuel element. The function of the spacer 60 is to separate the fuel rods in a fuel element, not disclosed in the figure, and to create turbulence in the flow of the cooling media for transferring of heat from the fuel rods to the cooling medium. The spacer 60 comprises spacer cells 62 for receiving fuel rods. The spacer 60 is constructed of a plurality of spacer walls 64. The gitter of the spacer 60 can for example be constructed from longitudinal and transversal spacer walls 64, of joined sleeves, or by other constructions. A spacer wall 64 can on its own constitute the reactor component, which together with a plurality of spacer walls 64 is assembled to a spacer 60. In the same way, the reactor component can constitute of a spacer sleeve, which together with a plurality of spacer sleeves is assembled to a spacer 60. Also other arrangements of the reactor component can be combined so that they individually or together constitute a spacer 60.

Figure 6b discloses a cross-section of a spacer wall 64 in a spacer 60. The spacer wall 64 comprises a core 2 of a metallic material, such as Inconel or Zircaloy, and a layer 3 of a ceramic material, such as zirconium dioxide (ZrO₂). Between the layer 3 and the core 2, an intermediate layer 4 is provided, which forms a gradual transition of the material properties from the core 2 to the layer 3. The layer 3 has protective properties that allows the material thickness of the spacer wall to be reduced in comparison with a spacer without the layer 3, wherein the pressure drop formed by the spacer 60 in the fuel element is reduced. By means of the layer 3 the spacer 60 is protected against different forms of interaction, such as shadow corrosion, abrasion, fretting and erosion corrosion, etc. By means of the protecting effect of the layer 3 also surrounding components around the reactor component are protected from different forms of interaction, such as shadow corrosion, abrasion, fretting and erosion corrosion, etc.

Figure 7a discloses a perspective view of an example of a reactor component in form of a tip of a control rod 74 of a control rod 70 for a pressuized water reactor. A plurality of control rods 70 is attached to a control rod element, not disclosed in the figure, which is adjusted according to the fuel design of interest. The function of the control rod 70 is to terminate the fission process in a pressurized water reactor. The control rod comprises control rod tubes that are filled with a neutron absorbing material 72, such as boron, hafnium, cadmium, etc. The control rod 70 falls into a guide tube of the fuel element, not disclosed in the figure, when the reactor is to be turned off.

Figure 7b discloses a cross-section of a tip of a control rod 74. The tip of the control rod 74 comprises a core 2 of a neutron absorbing material and a layer 3 of a ceramic material, such as silicone carbide (SiC). Between the layer 3 and the core 2, there is an intermediate layer 4, which forms a gradual transition of the material properties from the core 2 to the layer 3. The layer 3 has protective properties that assure that the tip of the control rod 74 is not damaged at contact with the guide tube of a fuel element. By the protecting effect of the layer 3, also surrounding components, such as guide tubes, positioning devices ("guide card") for the control rod, etc, around the reactor component 1 are protected from different forms of interaction, such as abrasion, fretting and erosion corrosion, etc.

The invention is not limited to the disclosed embodiments but can be modified and varied within the scope of the following claims.

## Claims

1. Reactor component (1) adapted to be used in fission reactors, comprising a core (2) consisting of a first material and a layer (3) consisting of a second material, wherein the layer (3) at least partly encloses the core (2), wherein the reactor component (1) comprises an intermediate layer (4) between the core (2) and the layer (3), **characterized in that** the layer (3) consists of at least a substance chosen from the group of Ti, Zr, Al, Fe, Cr, Ni, SiC, SiN, ZrO₂, Al₂O₃, and mixture thereof, and possible balance, and that the intermediate layer (4) is arranged to provide a gradual transition of the properties from the first material to the second material and has a material gradient that comprises a decrease of the concentration of the first material from the core (2) to the layer (3) and an increase of the concentration of the second material from the core (2) to the layer (3).

2. Reactor component (1) according to claim 1, **characterized in that** the material gradient comprises a successive decrease of the concentration of the first material from the core (2) to the layer (3) and a successive increase of the concentration of the second material from the core (2) to the layer (3).

3. Reactor component (1) according to any of claims 1 and 2, **characterized in that** the reactor component (1) is manufactured by means of sintering.

4. Reactor component (1) according to any of the previous claims, **characterized in that** the layer (3) is essentially corrosion resistant in an environment of a fission reactor.

5. Reactor component (1) according to any of the previous claims, **characterized in that** the layer (3) is arranged to protect the core (2) from an outer surrounding.

6. Reactor component (1) according to any of the previous claims, **characterized in that** the layer (3) is arranged to at least partly electrically isolate the core (2) from an outer surrounding.

7. Reactor component (1) according to any of the previous claims, **characterized in that** the layer (3) has a higher abrasion resistance than the core (2).

8. Reactor component (1) according to any of the previous claims, **characterized in that** the layer (3) comprises at least one of a metallic material and a ceramic material.

9. Reactor component (1) according to any of the previous claims, **characterized in that** the layer (3) completely encloses the core (2).

10. Reactor component (1) according to any of the previous claims, **characterized in that** the component (1) comprises at least a part of a spacer (60) for a fuel element.

11. Reactor component (1) according to claim 10, **characterized in that** the spacer (60) is arranged to be used in a light water fission reactor of type boiling water reactor.

12. Reactor component (1) according to any of the previous claims, **characterized in that** the component (1) constitutes at least a part of a tip of a control rod (74) arranged to be inserted into or in the vicinity of a fuel element.

13. Reactor component (1) according to claim 12, **characterized in that** the tip of the control rod (74) is configured to be used in a light water fission reactor of the type pressurized water reactor.

## Patentansprüche

1. Kernreaktor-Bauteil (1), das dazu ausgelegt ist, in Kernspaltungsreaktoren verwendet zu werden, umfassend einen Kern (2), bestehend aus einem ersten Material, und eine Schicht (3), bestehend aus einem zweiten Material, wobei die Schicht (3) den Kern (2) zumindest teilweise umschließt, wobei das Kernreaktor-Bauteil (1) eine Zwischenschicht (4) zwischen dem Kern (2) und der Schicht (3) umfasst, **dadurch gekennzeichnet, dass** die Schicht (3) aus mindestens einem Stoff, ausgewählt aus der Gruppe von Ti, Zr, Al, Fe, Cr, Ni, SiC, SiN, ZrO₂, Al₂O₃ und einem Gemisch davon, und einem möglichen Rest besteht, und dass die Zwischenschicht (4) dazu angeordnet ist, einen allmählichen Übergang der Eigenschaften von dem ersten Material zu dem zweiten Material bereitzustellen, und einen Materialgradienten aufweist, der eine Abnahme der Konzentration des ersten Materials von dem Kern (2) zu der Schicht (3) und eine Zunahme der Konzentration des zweiten Materials von dem Kern (2) zu der Schicht (3) umfasst.

2. Kernreaktor-Bauteil (1) nach Anspruch 1, **dadurch gekennzeichnet, dass** der Materialgradient eine sukzessive Abnahme der Konzentration des ersten Materials von dem Kern (2) zu der Schicht (3) und eine sukzessive Zunahme der Konzentration des zweiten Materials von dem Kern (2) zu der Schicht (3) umfasst.

3. Kernreaktor-Bauteil (1) nach einem der Ansprüche 1 und 2, **dadurch gekennzeichnet, dass** das Kernreaktor-Bauteil (1) durch Sintern hergestellt ist.

4. Kernreaktor-Bauteil (1) nach einem der vorangehenden Ansprüche, **dadurch gekennzeichnet, dass** die Schicht (3) in einer Umgebung eines Kernspaltungsreaktors im Wesentlichen korrosionsbeständig ist.

5. Kernreaktor-Bauteil (1) nach einem der vorangehenden Ansprüche, **dadurch gekennzeichnet, dass** die Schicht (3) dazu angeordnet ist, den Kern (2) vor einer äußeren Umgebung zu schützen.

6. Kernreaktor-Bauteil (1) nach einem der vorangehenden Ansprüche, **dadurch gekennzeichnet, dass** die Schicht (3) dazu angeordnet ist, den Kern (2) zumindest teilweise von einer äußeren Umgebung elektrisch zu isolieren.

7. Kernreaktor-Bauteil (1) nach einem der vorangehenden Ansprüche, **dadurch gekennzeichnet, dass** die Schicht (3) eine höhere Abriebfestigkeit als der Kern (2) aufweist.

8. Kernreaktor-Bauteil (1) nach einem der vorangehenden Ansprüche, **dadurch gekennzeichnet, dass** die Schicht (3) ein metallisches Material und/oder und ein keramisches Metall umfasst.

9. Kernreaktor-Bauteil (1) nach einem der vorangehenden Ansprüche, **dadurch gekennzeichnet, dass** die Schicht (3) den Kern (2) vollständig umschließt.

10. Kernreaktor-Bauteil (1) nach einem der vorangehenden Ansprüche, **dadurch gekennzeichnet, dass** das Bauteil (1) zumindest einen Teil eines Abstandshalters (60) für ein Brennelement umfasst.

11. Kernreaktor-Bauteil (1) nach Anspruch 10, **dadurch gekennzeichnet, dass** der Abstandshalter (60) dazu angeordnet ist, in einem Leichtwasser-Kernspaltungsreaktor vom Siedewasserreaktortyp verwendet zu werden.

12. Kernreaktor-Bauteil (1) nach einem der vorangehenden Ansprüche, **dadurch gekennzeichnet, dass** das Bauteil (1) zumindest einen Teil eines Kopfes eines Regelstabs (74) bildet, der dazu angeordnet ist, in ein Brennelement oder in der Nähe eines Brennelements eingesetzt zu werden.

13. Kernreaktor-Bauteil (1) nach Anspruch 12, **dadurch gekennzeichnet, dass** der Kopf des Regelstabs (74) dazu ausgestaltet ist, in einem Leichtwasser-Kernspaltungsreaktor vom Druckwasserreaktortyp verwendet zu werden.

## Revendications

1. Composant de réacteur (1) conçu pour être utilisé dans des réacteurs de fission, comprenant un coeur (2) constitué d'un premier matériau et une couche (3) constituée d'un second matériau, où la couche (3) entoure au moins partiellement le coeur (2), lequel composant de réacteur (1) comprend une couche intermédiaire (4) entre le coeur (2) et la couche (3), **caractérisé en ce que** la couche (3) consiste en au moins une substance choisie dans le groupe comprenant Ti, Zr, Al, Fe, Cr, Ni, SiC, SiN, ZrO₂, Al₂O₃, et leurs mélanges, et un reste éventuel, et **en ce que** la couche intermédiaire (4) est agencée pour assurer une transition progressive des propriétés du premier matériau vers le second matériau et présente un gradient de matériau qui comprend une diminution de la concentration du premier matériau depuis le coeur (2) jusqu'à la couche (3) et une augmentation de la concentration du second matériau depuis le coeur (2) jusqu'à la couche (3).

2. Composant de réacteur (1) selon la revendication 1, **caractérisé en ce que** le gradient de matériau comprend une diminution successive de la concentration du premier matériau depuis le coeur (2) jusqu'à la couche (3) et une augmentation successive de la concentration du second matériau depuis le coeur (2) jusqu'à la couche (3)

3. Composant de réacteur (1) selon n'importe lesquelles des revendications 1 et 2, **caractérisé en ce que** le composant de réacteur (1) est fabriqué par frittage.

4. Composant de réacteur (1) selon n'importe lesquelles des revendications précédentes, **caractérisé en ce que** la couche (3) est sensiblement résistante à la corrosion dans un environnement de réacteur de fission.

5. Composant de réacteur (1) selon n'importe lesquelles des revendications précédentes, **caractérisé en ce que** la couche (3) est agencée pour protéger le coeur (2) d'un environnement proche extérieur.

6. Composant de réacteur (1) selon n'importe lesquelles des revendications précédentes, **caractérisé en ce que** la couche (3) est agencée pour isoler électriquement, au moins partiellement, le coeur (2) d'un environnement proche extérieur.

7. Composant de réacteur (1) selon n'importe lesquelles des revendications précédentes, **caractérisé en ce que** la couche (3) présente une résistance à l'abrasion plus élevée que le coeur (2).

8. Composant de réacteur (1) selon n'importe lesquelles des revendications précédentes, **caractérisé en ce que** la couche (3) comprend au moins un matériau parmi un matériau métallique et un matériau céramique.

9. Composant de réacteur (1) selon n'importe lesquelles des revendications précédentes, **caractérisé en ce que** la couche (3) entoure complètement le coeur (2).

10. Composant de réacteur (1) selon n'importe lesquelles des revendications précédentes, **caractérisé en ce que** le composant (1) comprend au moins une partie d'un espaceur (60) pour un élément combustible.

11. Composant de réacteur (1) selon la revendication 10, **caractérisé en ce que** l'espaceur (60) est agencé pour être utilisé dans un réacteur de fission à eau légère du type réacteur à eau bouillante.

12. Composant de réacteur (1) selon n'importe lesquelles des revendications précédentes, **caractérisé en ce que** le composant (1) constitue au moins une partie d'une extrémité d'une barre de contrôle (74) agencée pour être insérée dans ou au voisinage d'un élément combustible.

13. Composant de réacteur (1) selon la revendication 12, **caractérisé en ce que** l'extrémité de la barre de contrôle (74) est conçue pour être utilisée dans un réacteur de fission à eau légère du type réacteur à eau pressurisée.
